# EUROPEAN PATENT APPLICATION

(11) **EP 2 573 665 A1**
(43) Date of publication of application: **27.03.2013**
(21) Application number: 12184960.8
(22) Date of filing: 19.09.2012
(51) Int. Cl.: G06F 3/0481

(54) **User interface feature generation**

(30) Priority: 20.09.2011 US 201113236925
(71) Applicant: F-Secure Corporation, 00181 Helsinki (FI)
(72) Inventor: Hautala, Marja, 00181 Helsinki (FI); Polyakov, Igor, 00181 Helsinki (FI); Nore,Ville, 00181 Helsinki (FI); Paivatie, Ville, 00181 Helsinki (FI); Kiljander, Harri, 00181 Helsinki (FI); Blomqvist, Carl-Eric, 00181 Helsinki (FI); Poropudas, Liina, 00181 Helsinki (FI); Hiltunen, Jussi, 00181 Helsinki (FI); Lofgren, Peter, 00181 Helsinki (FI)
(74) Representative: Lind, Robert

(57) **Abstract**

An example embodiment of the present invention provides an apparatus comprising at least one processor; and at least one memory including computer program code, the at least one memory and the computer program code configured to, with the at least one processor, cause the apparatus to perform at least the following: obtain a representation of an appearance of a physical device type; obtain one or more current backgrounds used in a desktop of a specific physical device; and generate a device icon relating to the specific physical device by associating the obtained one or more backgrounds with the representation of appearance of the physical device type, wherein the generated device icon is displayed on a display as a user interface feature.

## Description

### TECHNICAL FIELD

The exemplary and non-limiting embodiments of the present application relate generally to methods, apparatuses and computer programs and, more specifically, to the field of user interface feature generation.

### BACKGROUND

User interfaces are systems by which users are able to interact with different devices. A good user interface can make a product easy, efficient, and enjoyable to use. User interface solutions often rely on using different kind of features, such as icons or thumbnails, to make the product visually easier to use and understand.

Device icons can be used to represent specific files, directories, windows, options, or programs related to specific physical devices. User interface of a device may, for example, show device icons of other devices in the vicinity of the device or of other devices that are able to communicate with the device. The user of the device may then be able to control certain functions related to a specific physical device, for example, by selecting the related device icon. Existing methods for generating and interacting with device icons are limited. There is a need to develop new ways of enhancing user-machine interaction related to device icons.

### SUMMARY

The following presents a simplified summary of the invention and provides a basic understanding of some aspects of the invention. The summary is not an extensive overview of the invention, and does not identify key elements of the invention or specify the scope of the invention. Its sole purpose is to present some concepts of the invention in a simplified form as an introduction to the more detailed description that is presented later.

The claims describe various aspects of the invention.

According to one aspect of the present invention, there is provided a method, comprising of generating user interface features, the method comprising: obtaining a representation of an appearance of a physical device type; obtaining one or more current backgrounds that are used in a desktop of a specific physical device; and generating a device icon relating to the specific physical device by associating the obtained one or more backgrounds with the representation of appearance of the physical device type, wherein the generated device icon is displayed as a user interface feature.

According to to a second aspect of the present invention, there is provided an apparatus, comprising: at least one processor; and at least one memory including computer program code, the at least one memory and the computer program code configured to, with the at least one processor, cause the apparatus to perform at least the following: obtain a representation of an appearance of a physical device type; obtain one or more current backgrounds used in a desktop of a specific physical device; and generate a device icon relating to the specific physical device by associating the obtained one or more backgrounds with the representation of appearance of the physical device type, wherein the generated device icon is displayed on a display as a user interface feature.

According to a third aspect of the present invention, there is provided a computer program product comprising a computer-readable medium bearing computer program code embodied therein for use with a computer, the computer program code comprising: code for obtaining a representation of an appearance of a physical device type; code for obtaining one or more current backgrounds used in a desktop of a specific physical device; and code for generating a device icon relating to the specific physical device by associating the obtained one or more backgrounds with the representation of appearance of the physical device type, wherein the generated device icon is displayed as a user interface feature.

According to a fourth aspect of the present invention, there is provided a computer-readable medium encoded with instructions that, when executed by a computer, perform: obtaining a representation of an appearance of a physical device type; obtaining one or more current backgrounds used in a desktop of a specific physical device; and generating a device icon relating to the specific physical device by associating the obtained one or more backgrounds with the representation of appearance of the physical device type, wherein the generated device icon is displayed as a user interface feature.

All combinations of the various aspects, embodiments and features of the invention are possible and within the scope of the present invention as claimed.

### BRIEF DESCRIPTION OF THE DRAWINGS

The accompanying drawings provide a more complete understanding of the embodiments of the present invention according to the following descriptions:

FIGURE 1 shows a simplified block diagram that illustrates an example of apparatuses according to the invention;

FIGURE 2 shows an example of a method;

FIGURE 3 is an example of a use case scenario; and

FIGURE 4 is another example of a use case scenario.

### DETAILED DESCRIPTON OF THE DRAWINGS

Example embodiments of the present invention are later described in more detail with reference to the accompanying drawings, in which some embodiments of the invention are shown. The invention may be embodied in many different forms and should not be construed as limited to the embodiments set forth here. Although the specification may refer to "an", "one", or "some" embodiment in several locations, this does not necessarily mean that each such reference is to the same embodiment, or that the feature only applies to a single embodiment. Single features of different embodiments may also be combined to provide other embodiments.

The present invention can apply to any terminal, server, corresponding component, or to any communication system or combination of different communications systems that support the required functionality. Due to the rapid development of the specifications of computer systems and protocols that are used, all words and expressions should be interpreted broadly; they are intended only to illustrate the embodiment.

The term "background" as used here may describe, for example, an image used as a background of a user interface on a computer screen or mobile communications device. Also the terms "desktop picture", "desktop background", "wallpaper", "desktop pattern", desktop picture", and "computer wallpaper" may be used as examples of "background" in the exemplary embodiments. The background may be intended, for example, as a desktop background of a computer or as a home or an idle screen of a mobile phone. In addition to images, the background may also be a slide show of multiple images, photographs, drawings or combinations thereof. The background can also comprise different image sequences and animated features.

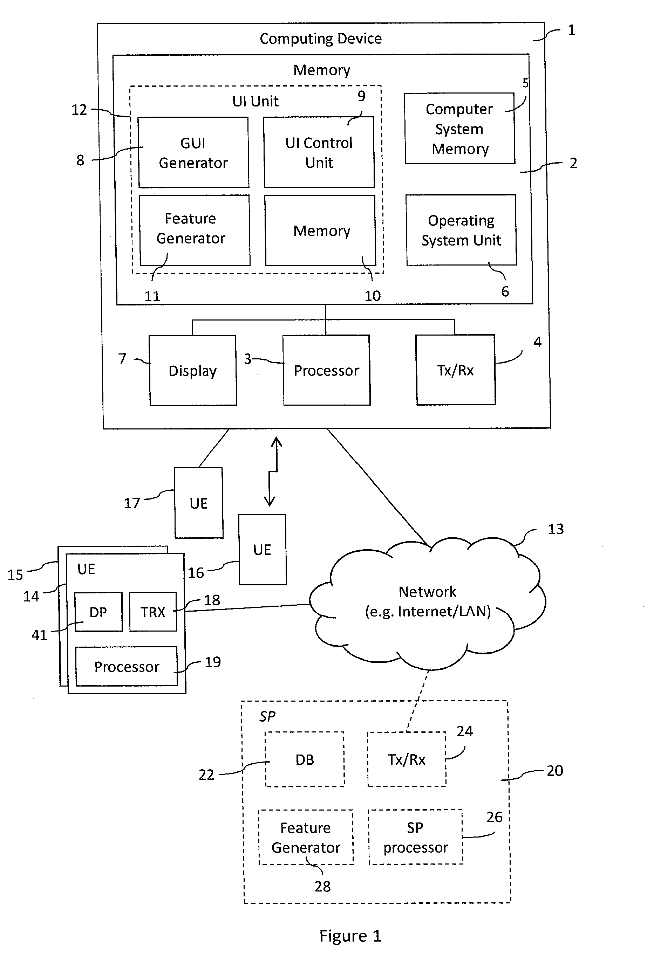

Figure 1 illustrates a general example of apparatuses in which the embodiments of the invention may be applied. It only shows the elements and functional entities that are required for understanding the arrangement according to an embodiment of the invention. Other components have been omitted for the sake of simplicity. The implementation of the elements and functional entities may vary from that shown in Figure 1. The connections shown in Figure 1 are logical connections, and the actual physical connections may be different. It is apparent to a person skilled in the field that the arrangement may also comprise other functions and structures.

Figure 1 is a schematic illustration of an example of a computer system 1 that is suitable for implementing the methods that are described below. The computer system 1 can be implemented as a combination of computer hardware and software. The computer system 1 comprises a memory 2, a processor 3, a transceiver 4 and a display 7. The memory 2 stores the various programs or executable files that are implemented by the processor 3, and provides a computer system memory 5 that stores any data required by the computer system 1. The programs or executable files that are stored in the memory 2, and implemented by the processor 3, can include an operating system unit 6, a user interface control unit 9, a graphical user interface (GUI) generator unit 8, and a feature generator unit 11. The memory 2 also provides a memory 10 that is used by the GUI generator unit 8, UI control unit 9 and the feature generator unit 11. The GUI generator unit 8, UI control unit 9, feature generator unit 11 and the memory 10 can be sub-units of a user interface unit 12. The transceiver 4 is used to communicate over a network 13 such as a LAN or the Internet. Typically, the computer system 1 may be a personal computer (PC), laptop, personal data assistant (PDA) or mobile phone, or any other suitable device. The computer system 1 may also be, for example, a television or any other consumer electronics devices.

The transceiver 4 may also communicate with other user equipment 14-17 over wired and/or wireless connections. The computer system 1 may communicate with other user equipment 14-17 also over the network 13.

The example of Figure 1 also illustrates a service provider system 20 that in some embodiments may communicate with the computer system 1 and/or the other user equipment 14-17 over the network 13. The service provider 20 may comprise a database 22, a transceiver 24, a processor 26 and a feature generator 28.

It should be noted that the computer system 1 is only one example of a device, and that the device 1 may have more or fewer components than shown, may combine two or more components, or may have a different configuration or arrangement of the components.

The display 7 may provide an input and an output interface between the device and a user. The UI control unit 9 communicates signals to and from the display 7 that shows visual output to the user. The visual output may include graphics, text, icons, thumbnails, video, and any combination of these. Icons may be pictures on a display screen that represent specific files, directories, windows, options, or programs. In an embodiment, the icons may be device icons that represent specific files, directories, windows, options, or programs related to specific physical devices. If users select a device icon relating to a specific physical device, then they may be able to control functions related to this physical device. Device icons are used, for example, by services that require having representations of devices in the user interfaces. An example of such a service is a cloud service protecting certain devices.

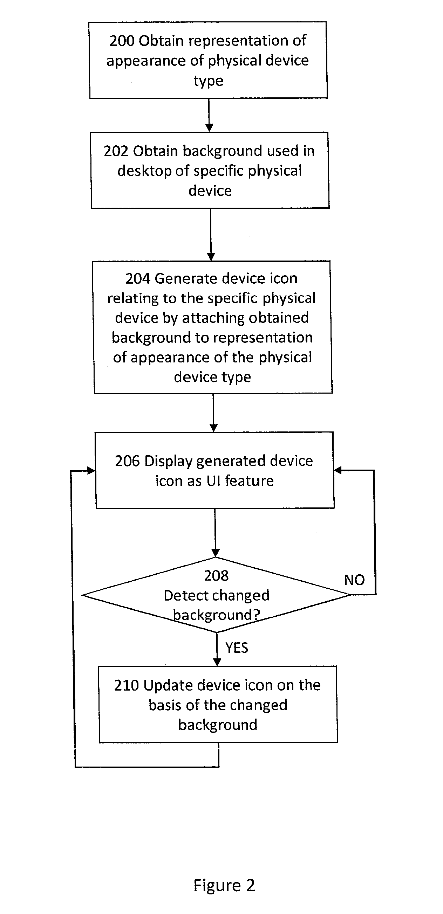

Figure 2 is a flow diagram illustrating an example of a process. The method starts in 200 where a representation of an appearance of a physical device type is obtained.

In 202, one or more current backgrounds that are used in a desktop of a specific physical device are obtained.

In 204, a device icon relating to the specific physical device is generated by associating the obtained one or more backgrounds with the representation of appearance of the physical device type.

In 206, the generated device icon is displayed as a user interface feature.

In 208, if changes in the current background that is used in the desktop of the specific physical device are detected, then 210 is entered. Otherwise 206 is remained.

In 210, the generated device icon is updated on the basis of the changed background.

In an embodiment, the representation of the appearance of the physical device type in 200 may be a photorealistic picture of a real device 1, 14-17 or a more abstract generalization of a physical device type. In an embodiment, the representation of the appearance of the physical device type may also be a photograph, a drawing or a combination of these. It is possible that the representation of the appearance of the physical device type is received from a database 22 that stores representations of different physical device types. It is also possible that the user creates the representation of the physical device type by means of the device 1, for example, by taking a photograph of an actual physical device and then modifying the photograph taken. In some embodiments, the representation of the physical device type may be obtained by rendering of the physical device, copying an image of the physical device type, or receiving the representation from a drawing application. Any other ways of obtaining the representations of the appearance of the physical device types can also be used, for example, receiving the representations from the other user equipment 14-17 or from the Internet 13 is possible.

In an embodiment, the backgrounds that are used in a desktop of a specific physical device may be obtained in 202 by requesting the backgrounds, for example, wallpapers, from the user equipment 14-17. Depending on the operating system used in the user equipment 14-17, there may be different processes of how the current background can be obtained and shared. For example, in Microsoft Windows operating system based computer devices, the current wallpaper may be retrieved by using the following steps: 1) reading the path of the current wallpaper from the following register: HKEY_CURRENT_USER\Control Panel\Desktop\Wallpaper, 2) Windows client making a copy of the current wallpaper reciding in the path read in step A, 3) Windows client sending the copy of the wallpaper to a server application 20, 4) Windows destroying the copy of the wallpaper after it has been sent, 5) the server application 20 distributing the wallpaper to all relevant clients 1, 14-17.

In an embodiment, the backgrounds may also be obtained by taking screenshots of the desktops of the physical devices. In these cases, the background obtained may also comprise user interface features, such as icons or thumbnails, that are shown in the desktop of the specific physical device. By showing also the user interface features with the actual wallpaper of the specific physical device, the generated device icon would be even more familiar to the users.

In an embodiment, it is also possible that the requested background is sent directly from one user equipment 14-17 to another, for example, from the user equipment 14 to the computing device 1. In an embodiment, if the background used in a device is changed, it is possible that the background data is automatically updated by sending the copy of the new background to the server 20 and the other user equipment 1, 14-17. In one example, the database 22 of a service provider 20 may store the copies of backgrounds of different user equipment and provide the copies to clients when requested. In an embodiment, the computer device 1 may check for new updates for the backgrounds and/or device icons each time the computer device 1 is swithed on or booted, for example. In another embodiment, the updates for the backgrounds/device icons may be checked regularly, for example, once a day.

In an embodiment, the association of the obtained one or more backgrounds with the representation of appearance of the physical device type for generating the device icon may be accomplished by attaching the background to the representation of appearance of the physical device type. In another embodiment, creating a link between the background and the representation of appearance of the physical device type may be used to generate the device icon. The device icons may be generated, for example, by the feature generator 11 of the computing device 1 or by the feature generator 28 of the service provider 20.

In an embodiment, a physical device 14-17 may have more than one background that is actively presented on the display. In such case, it may be possible to obtain just one of the background images used, for example, the first wallpaper image of a slide show presentation of multiple wallpaper images. In an embodiment, the device icon itself may be generated so that it has more than one wallpaper images associated to it. The device icon shown as a user interface feature may then show different wallpaper images as a slide show just as the real physical device would. In an embodiment, copying animated background features may also be enabled. If the specific physical device uses an animated background, it is possible to obtain one or more images of the animation as the background that is to be associated with the representation of appearance of the physical device type.

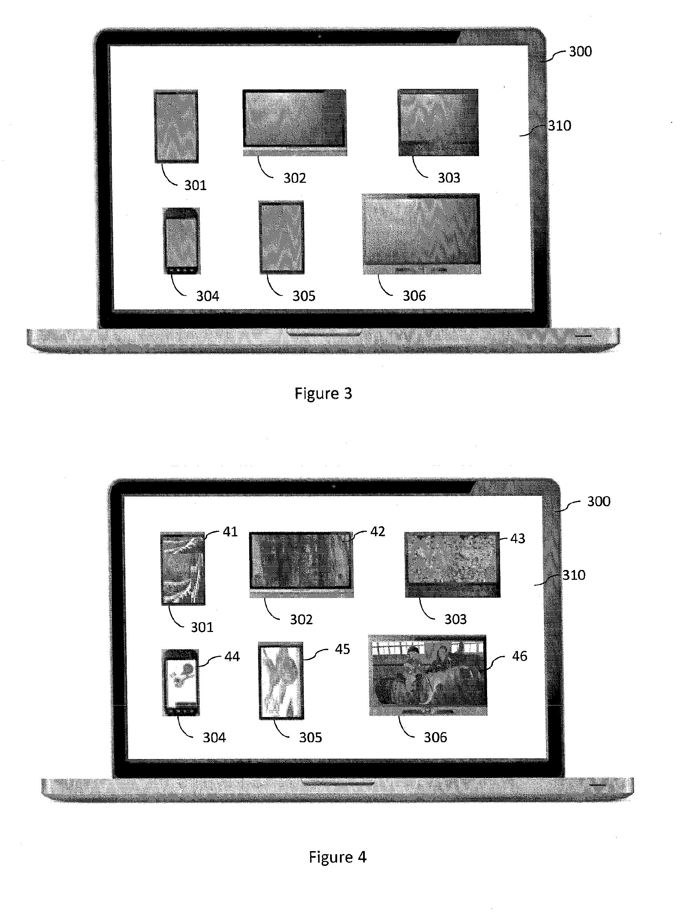

Figure 3 illustrates a use case scenario where an example of a user apparatus 300 is shown. The user interface of the apparatus 300 comprises a display 310. In the example of Figure 3, examples of device icons 301-306 are shown on the display 300. The device icons 301-306 have been generated based on the obtained representations of appearances of different physical device types. In an embodiment, the device icons 301-306 are shown on the display 310 whenever the user apparatus 300 has detected the related physical devices in the vicinity of the user apparatus 300. In another embodiment, only the device icons that relate to physical devices that are connected to the user apparatus 300 may be shown. In another embodiment, the device icons relating to any physical devices that are able to communicate with the user apparatus 300 may be shown. It is also possible that only device icons of separately allowed/determined physical devices are shown.

However, while the device icons that are representations of appearances of specific physical device types enable the user to easily detect the type of the physical device to which the device icon is relating, it may still be difficult to easily identify which one of the shown device icons is referring, for example, to the user's own smart phone. It is common that each family member of a family owns multiple different physical devices and each one of those devices may be represented as a device icon on the display 300. In the example of Figure 3, two device icons 301 and 305 are shown that cannot be differentiated based on just looking at the appearances of the device icons. This is because the appearances of those two physical devices types are the same or very much alike.

Figure 4 shows an example where the personalized device icons 301-306 are shown on the display 310 of the user apparatus 300. The device icons have been personalized by obtaining the current wallpapers 41-46 that are used in the desktops of the specific physical devices and showing the wallpapers 41-46 as elements of the device icons 301-306. As the device icons 301-306 are now generated to include the actual wallpapers of the specific physical devices, users are able to identify them easily. For example, even if two exact same types of physical devices are represented by device icons 301, 305, they can now be easily identified based on personal wallpapers 41, 45 that have been attached to the representation of appearance of the physical device types. This makes it possible for the users to easily and quickly identify their own devices with just one glance.

In an embodiment, it is possible to control whether the personal wallpaper is used in relation to the device icon. For example, a user may not always want to have the wallpaper of a specific physical device shown in the related device icon. For example, if a service is used by the whole family and the daughter does not want her parents to see her wallpaper, it is possible to disable the functionality.

In an embodiment, in addition to physical devices, also virtual devices can be personalized with user-preferred backgrounds. A virtual device, also referred to as a virtual peripheral, may be a device that mimics a physical hardware device, essentially tricking the CPU into believing that a device exists even when it does not. For example, users may select wallpaper to their virtual device (on-screen) from a set of wallpapers, or upload the wallpaper. In an embodiment, the device icon that is related to such a virtual device can be generated by associating the selected wallpaper to the device icon that relates to the virtual device.

Without limiting the scope, interpretation, or application of the claims appearing below, the technical effects of one or more of the example embodiments disclosed here improve user-machine interaction, and provide a solution to a technical problem of ease of use. When a highly personal feature of one's actual physical device has been implemented to a device icon, users are able to easily recognize the device icon that they are looking for. The personalized device icons and familiar features of the actual physical devices that they are relating to enhance usability significantly. Instead of referring to something general, it is possible to visualize more clearly what specific physical device is being referred to. This also creates a feeling of security and eliminates anxiety caused by uncertainty of selecting the correct user interface features. The investigations carried out by the inventors have revealed that the more concrete and familiar the elements and features in the user interface are, the more familiar, personal and easy to use the service is experienced to be.

The steps, points, signaling messages and related functions described above in relation to Figure 2 are in no absolute chronological order, and some of the steps may be performed simultaneously or in a different order. Other functions may also be executed between the steps or within the steps, and other signaling messages may be sent between the illustrated ones. Some of the steps can also be left out or replaced by a corresponding step. The system functions illustrate a procedure that may be implemented in one or more physical or logical entities.

The techniques described here may be implemented by various means. An apparatus or system that implements one or more of the described functions with an embodiment comprises not only existing means, but also means for implementing one or more functions of a corresponding apparatus that is described with an embodiment. An apparatus or system may also comprise separate means for each separate function. These techniques may be implemented in hardware (one or more modules) or combinations thereof. For software, implementation can be through modules, for example, procedures and functions that perform the functions described here. The software code may be stored in any suitable data storage medium that is readable by processors, computers, memory unit(s) or articles(s) of manufacture, and may be executed by one or more processors or computers. The data storage medium or memory unit may be implemented within the processor or computer, or as an external part of the processor or computer, in which case it can be connected to the processor or computer via various means known in the field.

The programming, such as executable code or instructions, electronic data, databases or other digital information can be stored into memories and may include a processor-usable medium. A processor-usable medium may be embodied in any computer program product or article of manufacture which can contain, store, or maintain programming, data or digital information for use by or in connection with an instruction execution system, including the processor 3 in the exemplary embodiment.

An embodiment provides a computer program product that comprises a computer-readable medium bearing computer program code embodied therein for use with a computer. The computer program code comprises code for code for obtaining a representation of an appearance of a physical device type, code for obtaining one or more current backgrounds used in a desktop of a specific physical device, and code for generating a device icon relating to the specific physical device by associating the obtained one or more backgrounds with the representation of appearance of the physical device type, wherein the generated device icon is displayed as a user interface feature.

Embodiments of the present invention may be implemented in software, hardware, application logic or a combination of these. In an example of an embodiment, the application logic, software or a set of instructions is maintained on any conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer.

The various aspects of the invention are not limited to the combinations explicitly set out in the independent claims. Other aspects of the invention may comprise combinations of features from the described embodiments, the dependent claims and the independent claims.

It is obvious to a person skilled in the field that, as the technology advances, the inventive concept can be implemented in various ways. The invention and its embodiments are not limited to the examples described above but may vary within the scope of the claims.

## Claims

1. A method of generating user interface features, the method comprising:
obtaining a representation of an appearance of a physical device type;
obtaining one or more current backgrounds that are used in a desktop of a specific physical device; and
generating a device icon relating to the specific physical device by associating the obtained one or more backgrounds with the representation of appearance of the physical device type, wherein the generated device icon is displayed as a user interface feature.

2. The method of claim 1, wherein obtaining the representation of an appearance of a physical device type comprises any of:
rendering of the physical device type;
copying an image of the physical device type;
taking a photograph of a physical device;
retrieving the representation of an appearance of the physical device type from a database;
receiving the representation of an appearance of the physical device type from a drawing application.

3. The method of claim 1 or 2, wherein obtaining one or more current backgrounds used in the specific physical device comprises any of:
retrieving the background from the specific physical device via any data communications connection;
requesting the background from the specific physical device;
receiving an update of the current background from the specific physical device;
retrieving the background from a database.

4. The method of any one of claims 1 to 3, wherein associating the obtained one or more backgrounds with the representation of appearance of the physical device type comprising at least one of the following: attaching the background to the representation of appearance of the physical device type, creating a link between the background and the representation of appearance of the physical device type.

5. The method of any one of the preceding claims, further comprising: using multiple generated device icons as user interface icons wherein each device icon refers to a specific physical device on the basis of the current background of the specific physical device being associated with the representation of appearance of the physical device type thereby enabling a user to identify the specific physical devices.

6. The method of any one of the preceding claims, wherein the background comprises one or more of the following: an image, a photograph, a drawing, an animation, a screenshot, a link to a file and combinations thereof.

7. The method of any one of the preceding claims, further comprising: updating the current background of a specific physical device when the background of the physical device has changed.

8. An apparatus, comprising:
at least one processor; and
at least one memory including computer program code,
the at least one memory and the computer program code configured to, with the at least one processor, cause the apparatus to perform at least the following:
obtain a representation of an appearance of a physical device type;
obtain one or more current backgrounds used in a desktop of a specific physical device; and
generate a device icon relating to the specific physical device by associating the obtained one or more backgrounds with the representation of appearance of the physical device type, wherein the generated device icon is displayed on a display as a user interface feature.

9. The apparatus of claim 8, wherein the apparatus is further configured to obtain the representation of an appearance of a physical device type by any of:
rendering of the physical device type;
copying an image of the physical device type;
taking a photograph of a physical device;
retrieving the representation of an appearance of the physical device type from a database;
receiving the representation of an appearance of the physical device type from a drawing application.

10. The apparatus of claim 8 or 9, wherein the apparatus is further configured to obtain one or more current backgrounds used in the specific physical device by any of:
retrieving the background from the specific physical device via any data communications connection;
requesting the background from the specific physical device;
receiving an update of the current background from the specific physical device;
retrieving the background from a database.

11. The apparatus of any one of claims 8 to 10, wherein the apparatus is further configured to associate the obtained one or more backgrounds with the representation of appearance of the physical device type by at least one of the following: attaching the background to the representation of appearance of the physical device type, creating a link between the background and the representation of appearance of the physical device type.

12. The apparatus of any one of claims 8 to 11, wherein the apparatus is further configured to use multiple generated device icons as user interface icons wherein each device icon refers to a specific physical device on the basis of the current background of the specific physical device being associated with the representation of appearance of the physical device type thereby enabling a user to identify the specific physical devices.

13. A computer program product comprising a computer-readable medium bearing computer program code embodied therein for use with a computer, the computer program code comprising:
code for obtaining a representation of an appearance of a physical device type;
code for obtaining one or more current backgrounds used in a desktop of a specific physical device; and
code for generating a device icon relating to the specific physical device by associating the obtained one or more backgrounds with the representation of appearance of the physical device type, wherein the generated device icon is displayed as a user interface feature.

14. The computer program product of claim 13, the computer program code further comprising any of:
code for rendering of the physical device type;
code for copying an image of the physical device type;
code for taking a photograph of a physical device;
code for retrieving the representation of an appearance of the physical device type from a database;
code for receiving the representation of an appearance of the physical device type from a drawing application
for obtaining the representation of an appearance of a physical device type.

15. The computer program product of claim 13 or 14, the computer program code further comprising any of:
code for retrieving the background from the specific physical device via any data communications connection;
code for requesting the background from the specific physical device;
code for receiving an update of the current background from the specific physical device;
code for retrieving the background from a database for obtaining one or more current backgrounds used in the specific physical device.

16. The computer program product of any one of claims 13 to 15, the computer program code further comprising any of:
code for attaching the background to the representation of appearance of the physical device type,
code for creating a link between the background and the representation of appearance of the physical device type
for associating the obtained one or more backgrounds with the representation of appearance of the physical device type.

17. A computer-readable medium encoded with instructions that, when executed by a computer, perform:
obtaining a representation of an appearance of a physical device type;
obtaining one or more current backgrounds used in a desktop of a specific physical device; and
generating a device icon relating to the specific physical device by associating the obtained one or more backgrounds with the representation of appearance of the physical device type, wherein the generated device icon is displayed as a user interface feature.
